# EUROPEAN PATENT APPLICATION

(11) **EP 1 406 137 A2**
(43) Date of publication of application: **07.04.2004**
(21) Application number: 03019016.9
(22) Date of filing: 21.08.2003
(51) Int. Cl.: G05B 19/042, G05B 19/05, G05B 19/406

(54) **Electronic fingerprints for machine control and production machines**

(30) Priority: 23.08.2002 US 226979
(71) Applicant: SIEMENS AKTIENGESELLSCHAFT, 80333 München (DE)
(72) Inventor: Kiesel, Martin, 91099 Poxdorf (DE); Mutscheller, Wolfgang, Dr., 70178 Stuttgart (DE)

(57) **Abstract**

An electronic fingerprint measures a state of a machine and/or process. A controller controls movements of at least one component of the machine and a fingerprint device selects, for measurement, certain movements of the machine for generating an electronic fingerprint that that is representative of a condition of the machine tool or process.

## Description

### Background.

Trace functionality in a drive or in automation system and trace selectable feedback or fixed parameters or process values, and all control parameters to control the process is traceable. For example, it is normal the practice today to employ trace functionality to control currents or motor currents. While trace functionality is used to set up the machine, it is not being used to develop ideas to implement or bring about new features in drive control, motion control or numeric control. It is not being used to describe the characteristics of the machine and use these characteristics to improve the quality of the process or product.

### Detailed Description Of The Preferred Embodiments.

Within the meaning of the present specification, electronic fingerprints for a machine (eg. Machine tool or production machine) are a set of measurements in a machine that are characteristic of and document the behavior of the machine. In machine control and production machines, every machine has variations in its behavior that make it unique. These unique behavioral traits are even diverse as even between machines of the same type and character. That is, they could even be the same model of machine. No matter how similar two machines are they will always have some unique behavior that can be isolated and documented to identify a condition of the particular machine. This is more true over time, where operation of the machine may, and indeed does, alter the working components of the machine or the alignment or the position of its components, therefore, changing the behavioral characteristics of the machine. The set of behavioral characteristics that uniquely identify a particular machine are herein referred to as electronic fingerprints.

The present invention determines, for any particular machine, those set of characteristics that uniquely identify the condition of that machine. The novelty in the present invention is not only the fingerprints, but also the skill in knowing which measurements will result in capturing the unique characteristics and which measurements to make. That is, the measurements characterize the individual characteristic of the machine. Further, it is optimum to identify the minimum set of behavioral characteristics that identifies the particular machine. In addition, the electronic fingerprints of the present invention are derived, such that, no matter how the fingerprint evolves over time, a fixed fingerprint system is developed so that the machine condition can be identified over time.

There are several advantages to employing electronic fingerprints. For one thing, it allows the operator to check the instantaneous condition of the machine. Further, the changes of the behavior of a machine can be compared to an initial state to a later state by certain measurements in the machine. The deviation compared to the original state of the machine could be telling of the machines performance. The measurements may be repeated periodically to measure the behavior of machines. This could also be used for predictive maintenance by using the fingerprint to indicate a machine condition.

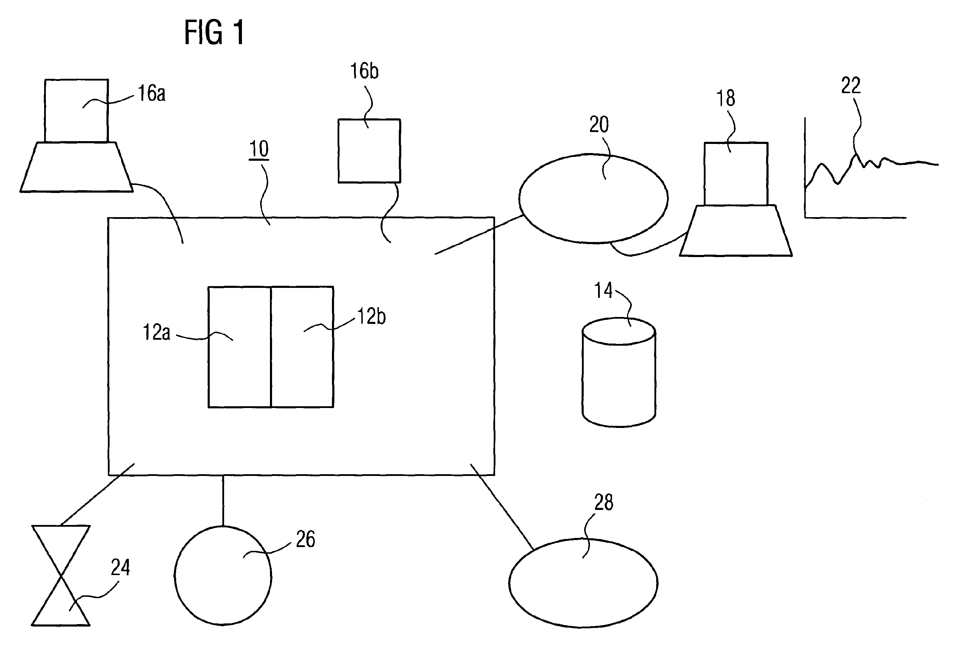

Now with reference to Figure 1, the present invention provides an automation component 10 that makes available mechanisms to determine electronic fingerprints. The automation component may be, for example part of a machine tool or a production machine. Generally, there is provided a controller (eg. PLC) for logic control 12a and the mechanical part that is driven by the controller (motion control or numeric control)12b. As an alternative one controller could do both jobs (logic and motion control). There is further provided a user interface 16a that provides the user with an interface for monitor and control of the automation component 10.

A separate user interface 16b provides a user interface with an engineering system (setup, configuration, programming) for the automation component. The user interfaces 16a and 16b might be running on one HW-platform. In addition, remote access to, for example, a remote PC 18 through a communication channel 20, such as the Internet or Intranet, provided by an appropriate interface, TCP/IP or Ethernet, etc. An analysis 22 of the machine can be derived and displayed at the remote PC, for example. A machine data server (14) is linked to the automation component. The present invention specifically provides means for identifying the state of the machine and/or product, and a condition thereof, by a fingerprint of the machine at a given time. The automation components provide means for capturing fingerprints of the machine.

There are, of course, provided additional input/output signals depending on the type of machine controlled. Here, for example, there is provided an input/output rack for inputting and outputting signals 24, such as those found on a programmable logical controller (PLC). There is also provided an axis mechanism 26 which controls an axis of a movable piece of the machinery, such as robotic arm, drill press, etc. The machine may also be coupled to other processors, such as in a communication network 28.

In order to obtain and analyze the fingerprints, the present invention provides a graphical user interface (GUI) 18. This may be, for example, a human machine interface (HMI) that is modified according to the present invention to lift, store and examine the fingerprints. The interface could be provided, for example, on a host PC and connected to the automation component by a communication interface, such as, for example the Ethernet or Internet. With the interface provided, the fingerprints can be evaluated manually or automatically according to the particular description thereof set forth below.

As already indicated, part of the novelty of the invention is in knowing which measurements to make that will reveal the electronic fingerprint. The technique may vary according to type of machine. For example, machine tools having a cutting function can be caused to undergo a test trace function. However, other machines, such as a pump have no trace capability. The invention includes various techniques, dependent on the type of machine, to develop, or "lift", the electronic fingerprint. The recognition of the finger prints is realizable using various techniques.

Fingerprint functionality can be implemented in the system software of the automation component 10. As already mentioned, electronic fingerprints can be realized concretely using an application of, for example, a trace test, for machine tools having a trace functionality with a numerical control. In another aspect, there is provided in the automation component an easily programmable expiration operational sequence. Using such application programs, the fingerprints can be lifted. The automation component places suitable Application Program Interfaces (API) over from an application program to finger prints to take up.

If the condition of the machine is the fingerprint and they are lifted using programming applications, the programming signals can be thought of as the "dust" with which the fingerprints are formed. These signals may be, for example, internally accessible signals, which are suitable, to document the quality of an expiration or a process. Thereby, the process specific parameters are defined. Also, any of the measured values of drives, parameters from motion controllers, production machines or format data from the application program may be utilized.

In one example, the signal may be measured from distinguished, event-controlled signals that are generated cyclically or during a certain period. For another, the measured signals are derived from the control and/or by control/application via auxiliary sensor technology. If necessary, the auxiliary sensor technology could include, for example, acceleration meters.

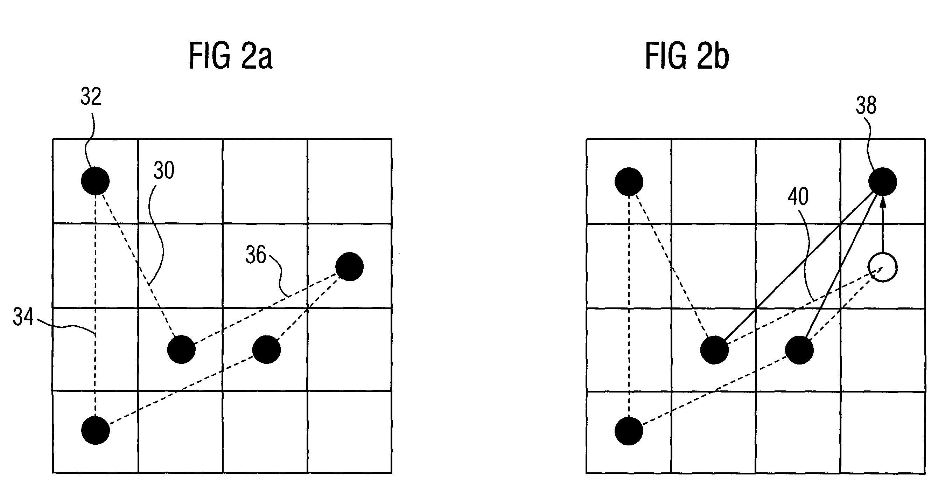

As shown in Fig. 2a, the electronic fingerprint 30 of the present invention can be visualized as a two print. As shown by the parameter points 32, whose value is indicated by the position in the matrix 34, connected by the dashed lines 36. In this manner, it can be readily seen that the electronic fingerprint of the present invention is similar to an actual fingerprint in the sense that it maps out an imprint that is characteristic of the machine from which the electronic fingerprint is lifted. Of course, the fingerprint shown in Fig. 2a is an oversimplification, and can be expressed as a complex array of parameter points and may be an n-dimensional fingerprint displayed as a computer graphic.

As will be appreciated from Fig. 2. The condition of the machine can be determined from the fingerprint. In Fig. 2b, for example, there is shown a fingerprint that is unhealthy. Notice the deviation 38, illustrated by the arrow, which indicates a variance from the healthy fingerprint of Fig. 2a. The variance 40 can be thought of as the area underneath the portion of the fingerprint lying outside the healthy fingerprint. The fingerprints can be stored in advance in a database and later compared. Also, unhealthy fingerprints can be collected over time to form a database for future reference in other applications. With the electronic fingerprints of the present invention, it will be instantly recognized that it is advantageous to analyze machines in this manner because of the relevant ease in which deviations are identified. This is particularly useful for user visual inspection of the fingerprints. In a glance, they can determine whether the machine is in an error condition or not.

The fingerprint may be representative of a plurality of machine related states, including a machine behavior, for example. The fingerprint may also be representative or product quality, which depends on both the machine and the material. In the example of Figures 2a and 2b, the fingerprint may indicate, in a laser cutting machine, the special relationship between speed of movement of laser and power. If, for example, the relationship is not maintained at the correct fingerprint (Fig. 2b) the laser will move too slowly and burn holes in the workpiece. On the other hand, the laser may move too quickly and wont cut the material. When the process is stable, as in Fig. 2a, then the product quality can be determined, i.e., the workpiece is cut properly by the laser in our example.

As with any fingerprint, the electronic fingerprint is developed for analysis, a sort of electronic sleuthing. As already described, the evaluation PC software runs an automated comparison/evaluation of the finger prints. The results of which have wide application including preventing recognition of machine wear, quality assurance, maintenance, production data collection, error evaluation, documentation of the error, delivery status, condition after software boot up and automatically correcting errors. In error evaluation for diagnostics, in particular, the finger prints can be derived when the machine is improperly running. This is preferably achieved when the machine is running certain critical procedures, from which conclusions are telling as to possible errors.

The building of the fingerprints can be achieved using the following applications, for example. In the configuration in the engineering system, for example, there can be obtained the parameters for the fingerprint. In configuration of the monitoring points, for example, when it is configured which axis is to be controlled, parameters for control are sensed. Otherwise, the parameters may be obtained upon configuration of the observation parameters (e.g. situation layer, moment actual values, observer values, application variables, etc.) The fingerprint parameters may also be developed from the parameters resulting from a start and stop event for recording projections or over application program control.

In another manner, the finger prints can be produced at the software vendor end. This can be achieved by marking appropriate attributes of the relevant data/variables during programming of the software. This is supported by the Engineering System (FIG1, 16b) of the automation component. The measurements may be taken, for example, from the trace information. In addition, the vendor can provide for the measurements along with the evaluation software for evaluation using the evaluation PC. There can be provided, for example, evaluation software for comparison of the fingerprints. The application software, software for finger print production (running in the automation component) and evaluation software (running in the evaluation PC) can be provided in any of the known, or equivalent, programming languages, including Java, for example.

There are various methods by which the fingerprint application can be applied. In one method, the fingerprint application is downloaded through the PC communication connection to the machine, i.e., automation component. Further, the application can be applied by deliberate machine service personnel, via an external service branch. The fingerprint application could be automatically started by the application program itself. This could be automatically executed by the application, for example, during certain maintenance or time intervals or during reequipping procedures. Additionally, the fingerprint program may be implemented by remote operation, for example, over the Internet. Also, the finger print measurement application can be supported optionally by a deposited workflow. It is also within the invention that the user manually performs measurement of the fingerprints of the selected machine and causes the PC to note target/actual conditions, such as cyclically over a certain length of time, for example.

Like all fingerprints, the electronic fingerprints should be profiled. The first step in profiling of the fingerprints is achieved by storing the fingerprint in a suitable memory. In the machine/automation component, for example, the fingerprint can be stored on Hard Disk or MemCard. Alternatively, the fingerprint can be stored on the data server of the machine (Fig1, 14), or on the evaluation PC, by remote file. The fingerprints may even be stored in additional machine information storage, such as production data or format information data.

Once stored, the profiling of the fingerprints continues with the evaluation process. This may take place in the evaluation PC and may be accomplished either manually or automatically. From the results of the analysis adjustments to the machine may be derived. Composites of "healthy" fingerprints may be stored in advance in the evaluation software. These may be in the form, for example, of tolerances of the various machine components. With such an analysis capability, the fingerprints may evaluated or developed over time.

Now that the structure of the present invention has been described, let us now turn to actual application examples employing the invention. The following examples illustrate the operation of the invention in regard to two types of machines, namely the production machine and the machine tool. In the former, the overall fingerprinting is concerned with the determination product quality and the machine quality or with both aspects. In contrast, the machine tool focuses of the determination of the machine quality, i.e., machine condition. With many measuring procedures there are overlapping effects between quality of the processing material and machine quality and these examples are no exception. In any event, the following examples are so provided.

In the first example, a packaging machine is described. It is desired, for example, to perform a pressure mark correction procedure, which corrects the pressure mark of the packaging machine. In this instance, measurements of the process are collated into an actual value profile. The same measurements can be derived from a fast pressure mark correction, such as when a fast correction is driven out. The actual value profile changes can be compared over time. With such a comparison, the end product can be influenced directly.

In the same packaging machine, a real time view of the motion of the machine may also be viewed. Critical ranges in the total course of motion with a trace, for example, can be obtained. This could be performed, for example, with welding seam such as in foil welding. For example, there may be measurement relevant parameters for the view process. Or, the parameters measured may be the target values from control and drive. The measured values may also be actual values of sensor technology or process variables from the application.

There is also provided a kind of test operation by application of a test drive procedure for testing the machine. In the test operation, a cyclic machine clock of the packaging machine with a defined production speed cycles through critical sections of the course of motion. During which time the present invention records the relevant actual values that take place.

The above example is directed more to the operation of the machine. Here now is a injection moulding machine example where the emphasis is more on the quality of the product. Here, the injecting process for a certain tool is examined. With any given tool, there is normally provided prescription data, such as the profile, temperature attitude, etc. The prescription data is taken as the base fingerprint which is compared to actual data received over certain periods. The data is obtained from the injecting process from, for example, the manner in which the pressure or strength of the injection is applied. The values may be compared, for example, using an integral based averaging algorithm which is applied to values collected over a predetermined period of time. From the measured variables, load differences and aging influences of the tool, for example, can be derived. With this data, the quality of the end product may be better influenced.

According to the foregoing description, a fingerprint for a machine tool or production machine may be derived to determine a condition of a machine or monitor the quality of the production machine. With the foregoing fingerprint parameters it is possible also to troubleshoot problems. In the following there is presented two simple examples where such machine problems can be pinpointed by fingerprint measurements. The main technique applied is to measure the fingerprints periodically and compare the deviations of the results with the initial measurements.

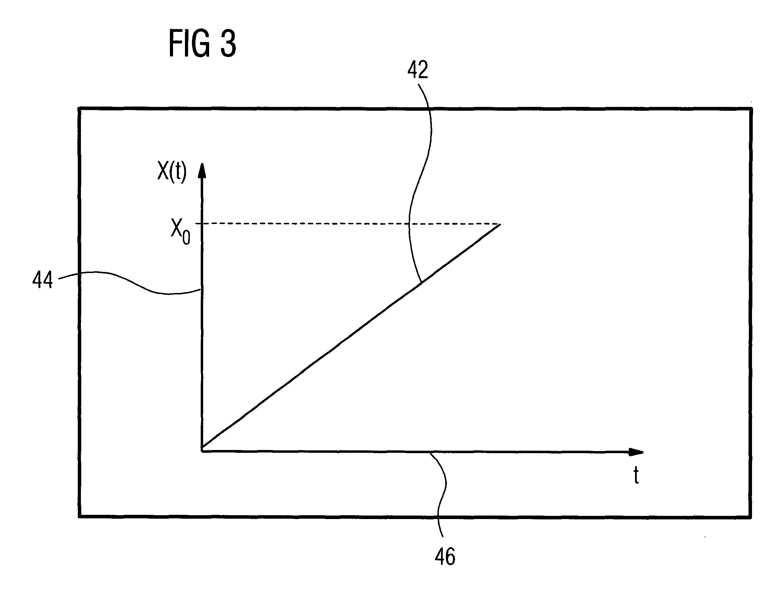

As shown in Figure 3, there is graphically illustrated the measurements obtained from an operation to change the periodic error in the pitch of a ball screw.
It is assumed, according to the example, that there is an axis X which is driven by a ball screw. In addition to the motor measuring system, there is also provided an additional linear scale along the axis X. The motor measurement system is used for the closed loop control, whereas the linear scale is used as a measurement device during this measurement. If the axis is moved with a constant speed along a certain travel area X₀, the ideal behavior is shown in Figure 3.

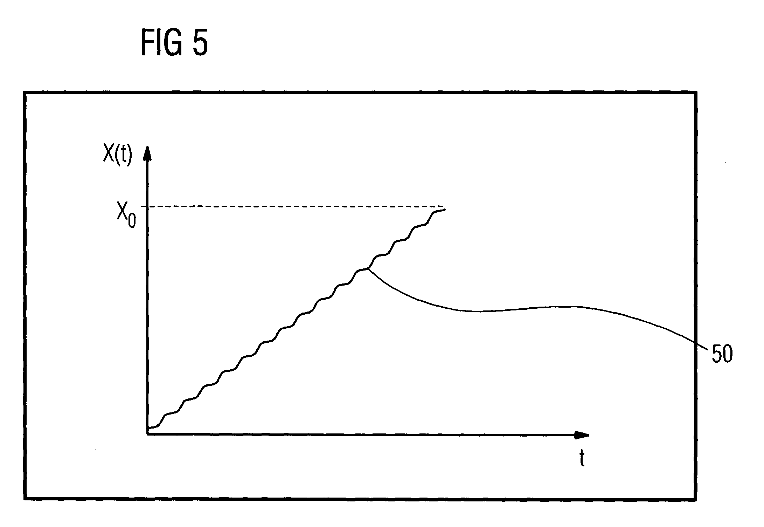

The movement X(t) of the axis is ideal to demonstrate the value of the invention, as inaccuracies during the production process of the mechanical components of the machine are quite experienced in the actual world. For instance, it is very often the case that a real ball screw exhibits a cyclic error in the pitch in comparison to the ideal. Due to mechanical forces, this error is magnified over a certain period of time. This situation is shown in Fig. 5 wherein the cyclic errors in the pitch is shown enlarged and schematically. It may be, for example, that the error of the ball screw is enlarged after a certain time of machining due to mechanical forces

Now if the error exceeds a certain period of time, the ball screw should be changed in order to avoid inaccuracies during machining. These errors can be measured in the following way according to the present invention. In the first instance, the axis is moved with a constant speed and only the motor measurement system is used for closed loop control. In this case, the motor moves with a constant rotation speed. The constant speed yields to a constant rotation of the ball screw. The pitch error is translates to the linear scale, where we have a periodic deviation from the ideal behavior. This is apparent from the figures.

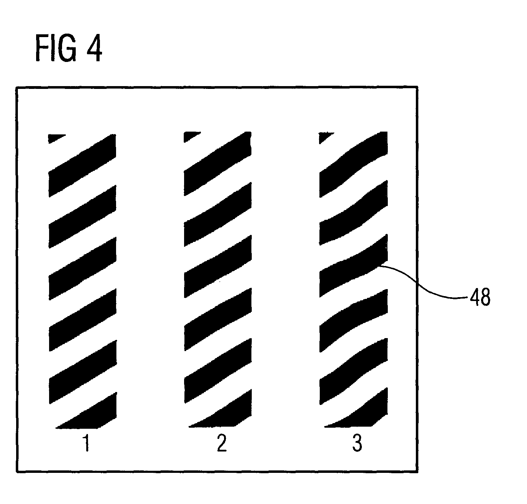

In FIG 4 a ball screw 48 is shown schematically in a lateral view. The first embodiment 1 shows a new ball screw with a uniform thread and a constant thread lead.
The second embodiment 2 shows a ball screw with a little wavy thread.
The third embodiment 3 shows a weared thread with a big waviness. This waviness is overstated, to see it in the FIG 4. Such a waviness leads for example to a performance of x(t) like pictured in FIG 5.

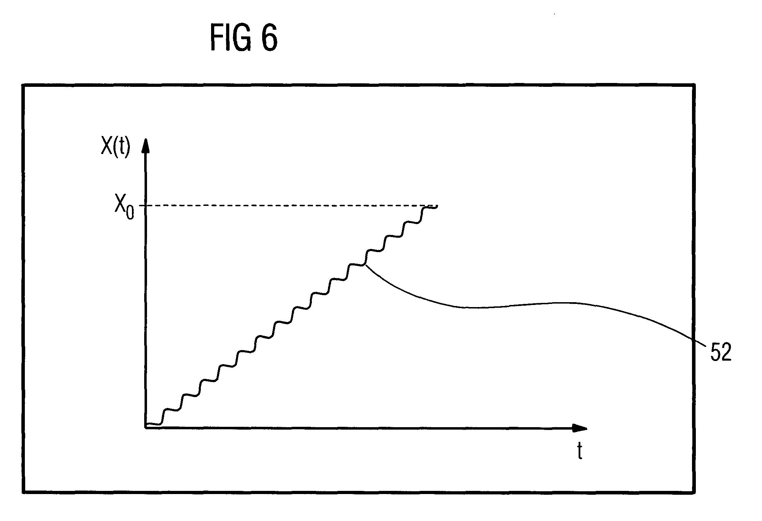

In Fig. 6, cyclic deviations of the signal of the direct measurement system in case of cyclic pitch errors is shown where the motor measurement system is used for closed loop control. In this case, the more the errors in the pitch are enlarged, the more there is likely to be deviations within the signal of the linear scale. At this time, if the axis is measured periodically in this way, it is possible to see critical errors before workpieces are damaged. In other words, it is either possible to change the ball screw, not after a fixed period of time, but at a point in time before the critical state is reached or it is possible to change the compensation values for the pitch screw error automatically.

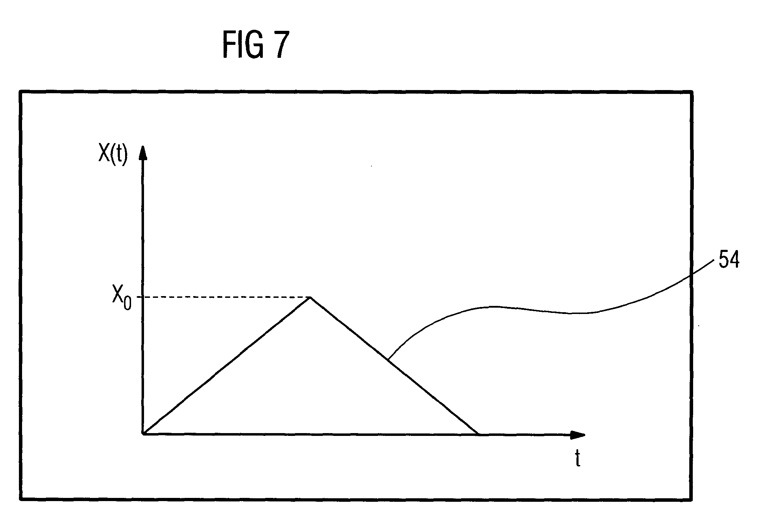

As shown in Figure 7, in another example, backlash detection is demonstrated. By means of the same method of the invention described, it is also possible to detect, for example, a backlash in a gear box. A backlash may occur due to a build up of mechanical stresses. For this measurement, we move the axis forward and backward at a constant speed. Again, only the motor measurement system is used for closed loop control and the linear scale is used only for measurement purpose.

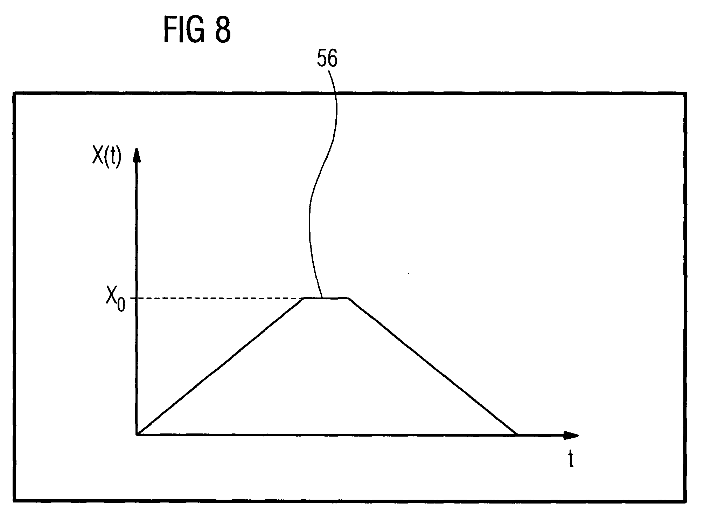

Ideally the X(t) behavior would be as it is shown in Fig. 7. As shown, X(t) of the direct measurement system includes no backlash as the axis is moved forward and backward at a constant speed. The influence of backlash on the measured signal, due to mechanical wear, for example, can be seen in Fig. 8. As will be seen, due to the backlash in the system, the axis does not follow immediately. This is particularly apparent when the motor changes its rotation direction. At first, the axis stays at its current position and then moves back with a constant shift.

From the fingerprint derived, it is apparent that the errors can be determined earlier than when the critical state is reached and maintenance can be applied before breakdown of the system. It is possible, for example, to predict problems arising due to backlash by periodically repeating the measurement and checking whether a pattern of critical deviation occurs in comparison to the initial state of the machine has been reached. In addition, it will be appreciated that the degree of maintenance can be varied according to the fingerprint of the present invention. That is, there are degrees of unhealthiness of a fingerprint and, depending on the degree, it may be determined that maintenance is not yet needed. On the other hand, the fingerprint may be employed to determine minimum maintenance, deciding to allow the machine to continue to operate under less than optimum conditions, thereby better managing the maintenance of a machine.

## Claims

1. A electronic fingerprint apparatus for measuring a state of a machine and/or process, comprising:
an automation component comprising a controller for controlling movements of at least one component of the machine or a portion of the process, wherein the automation component provides means for capturing electronic fingerprints representative of the state of the machine and/or process; and
a fingerprint device for selecting, for measurement, certain movements of the machine for generating an electronic fingerprint that that is representative of a condition of the machine tool

2. The apparatus of claim1, wherein the automation component is a numeric control, a motion controller, a programmable logic controller or an intelligent drive.

3. The apparatus of claim1, wherein the automation component and the corresponding Engineering System provide a program platform / environment for the implementation of electronic fingerprints by an application engineer.

4. The apparatus of claim1, wherein applicative implementation of the fingerprints is done by a configuration process in the engineering system and/or a programming process using a specific API for the implementation of fingerprints.

5. The apparatus of claim1, wherein the start of capturing the fingeprints is done by one of the following actions selected from the group consisting of starting by local user via local HMI and starting by remote user via Ethernet / Internet and starting based on an event evaluated in an application program running in the automation component.

6. The apparatus of claim1, wherein the apparatus is used for one of the following machines selected from the group consisting of a machine tool and a packaging machine and a rubber and plastics machine and a presses and printing machine and a wood machine and a glass machine and a ceramic machine and a stone machine and a textile machine and a robotics and a handling machine.

7. The apparatus of claim 1, wherein the fingerprint device and the automation component generate an electronic fingerprint that is generic to a type of machine tool that indicates a stable behavior of the machine tool.

8. The apparatus of claim 2, wherein the fingerprint device and the automation component generates an electronic fingerprint having a deviation from the stable behavior, thereby indicating an unstable behavior of the machine.

9. The apparatus of claim 1, wherein the fingerprint device and the automation component generates a specific fingerprint of a particular production machine that is representative of a state of an output of the particular production machine and/or the stable behavior of the machine.

10. The apparatus of claim 1, further comprising a graphical user interface for displaying a graphical depiction of the electronic fingerprint.

11. The apparatus of claim 1, wherein the fingerprint device has a capability of generating a periodic electronic fingerprint that is developed from a snap shot of the state of the machine at a certain time.

12. The apparatus of claim 6, further comprising an application for comparing the electronic fingerprints over time.

13. The apparatus of claim 6, further comprising a memory for storing the electronic fingerprints as a database.

14. The apparatus of claim 1, further comprising a maintenance scheduler for scheduling maintenance of the machine based on a prediction of a failure of the machine based on the electronic fingerprint.

15. The apparatus of claim 1, further comprising a remote communication capability that couples the machine to a remote processor.

16. The apparatus of claim 10, wherein the electronic fingerprint is downloaded over the remote communication to the remote processor.

17. A method for generating electronic fingerprints for measuring a state of a machine and/or process, comprising the steps of:
selecting parameters of at least one component of the machine, for measurement, that is representative of a condition of the machine;
reading the parameters; and
storing the read parameters, thereby creating an electronic fingerprint of the machine representative of the condition of the machine.

18. The method of claim 17, wherein the step of selecting selects parameters that at a time when the machine is in a stable state to generate thereby a generic type of electronic fingerprint that indicates a stable behavior.

19. The method of claim 18, wherein the step of selecting selects parameters having a deviation from the stable behavior, thereby generating an electronic fingerprint indicating an unstable behavior of the machine.

20. The method of claim 17, wherein the step of selecting selects parameters from a particular production machine that is representative of a state of an output of the particular production machine.

21. The method of claim 17, further comprising the step of generating a graphical depiction of the electronic fingerprint.

22. The method of claim 17, further comprising the step of comparing the electronic fingerprints over time.

23. The method of claim 17, further comprising the step of scheduling maintenance based on the electronic fingerprint.

24. The method of claim 17, further comprising the step of remotely coupling the machine to a remote processor.

25. A computer readable product having encoded therein instructions for driving a computer processor according to the steps of claim 17.
